# NEUE EUROPÄISCHE PATENTSCHRIFT

(11) **EP 3 685 652 B2**
(45) Veröffentlichungstag und Bekanntmachung des Hinweises auf die Entscheidung über den Einspruch: **15.07.2026**
(45) Hinweis auf die Patenterteilung: 25.05.2022
(21) Anmeldenummer: 20401007.8
(22) Anmeldetag: 24.01.2020
(51) Int. Cl.: A01C 17/00

(54) **VERFAHREN ZUM AUSBRINGEN VON STREUGUT**
METHOD FOR SPREADING GRANULAR MATERIAL
PROCÉDÉ D'ÉPANDAGE D'UN PRODUIT D'ÉPANDAGE

(30) Priorität: 28.01.2019 DE 102019101978
(43) Veröffentlichungstag der Anmeldung: 29.07.2020
(60) Teilanmeldung: 22159050.8
(73) Patentinhaber: Amazonen-Werke H. Dreyer SE & Co. KG, 49205 Hasbergen (DE)
(72) Erfinder: Bäumker, Herbert, 49176 Hilter (DE)
(74) Vertreter: Grünecker Patent- und Rechtsanwälte PartG mbB

(56) Entgegenhaltungen:
- EP-A1- 0 968 639
- EP-A1- 2 944 175
- EP-A1- 3 165 071
- EP-A1- 3 241 420
- EP-A1- 3 241 421
- DE-A1- 19 843 747
- DE-U1- 9 306 605
- Betriebsanleitung der Dungerstreuerreihe AXIS 20.1/30.1/40.1/50.1" der RAUCH Landmaschinenfabrik GmbH,veröffentlicht im April 2013 (siehe den Druckvermerk"0413" auf dem Deckblatt unten rechts)
- Rechnung und Lieferschein zu "Rauch AXIS"
- Montageanleitung zu "Rauch GSE-25 plus"
- Betriebsanleitung der Düngerstreuerreihe ”MDS 10.1/11.1 /12.1 /17.1 /19.1" der RAUCH LandmaschinenfabrikGbmH, veröffentlicht im November 2009 (siehe den Druckvermerk"1109" auf dem Deckblatt unten rechts)
- Rechnung und Lieferschein zu "Rauch MDS"

## Beschreibung

Die Erfindung betrifft ein Verfahren zum Ausbringen von Streugut nach dem Oberbegriff des Patentanspruchs 1.

Ein derartiges Verfahren ist in DE 198 43 747 A1 offenbart.

Zum Ausbringen von Streugut werden in der Landwirtschaft üblicherweise landwirtschaftliche Streugeräte eingesetzt, welche zwei rotierend antreibbare Streuscheiben aufweisen. Dabei sind an den Streugeräten regelmäßig unterschiedliche Streumodi einstellbar, sodass die Streugutausbringung während des Streuvorgangs angepasst werden kann.

Während des Befahrens von Innenfahrspuren innerhalb eines grenzfernen Innenbereichs einer landwirtschaftlichen Nutzfläche erfolgt die Streugutausbringung üblicherweise in einem sogenannten Normalstreumodus. Während des Befahrens einer äußeren Grenzfahrspur innerhalb eines grenznahen Bereichs der landwirtschaftlichen Nutzfläche erfolgt die Streugutausbringung in einem Grenzstreumodus, damit auch in Grenznähe eine möglichst gleichmäßige Querverteilung des Streuguts erzielt werden kann.

In der Praxis haben sich unterschiedliche Fahrweisen beim Ausbringen von Streugut in Grenznähe durchgesetzt, welche beispielsweise bei der Düngerausbringung zu starken Über- und Unterdüngungen in Grenznähe führen. Die der Erfindung zugrundeliegende Aufgabe besteht somit darin, eine möglichst gleichmäßige Querverteilung des Streuguts auch in Grenznähe umsetzen zu können. Idealerweise sollen dabei zumindest teilweise Fahrgassensysteme genutzt werden, welche sich in der Praxis bereits etabliert haben.

Die Aufgabe wird gelöst durch eine Verfahren gemäß Anspruch 1. Es ist vorgesehen, dass im Grenzstreumodus eine Grenzstreueinrichtung zum Umlenken zumindest eines Teils des abgeworfenen Streuguts verwendet und im Vergleich zum Normalstreumodus eine reduzierte Gesamtmenge an Streugut ausgebracht wird.

Die Erfindung macht sich die Erkenntnis zunutze, dass durch die Verwendung einer Grenzstreueinrichtung zum Umlenken zumindest eines Teils des abgeworfenen Streuguts in Kombination mit einer Reduzierung der Streugutmenge auch in grenznahen Bereichen eine vergleichsweise gleichmäßige Streugutverteilung erzielt werden kann.

Die Grenzstreueinrichtung ist vorzugsweise im Abwurfbereich einer Streuscheibe positioniert und Bestandteil des landwirtschaftlichen Streugeräts. Vorzugsweise ist die Grenzstreueinrichtung in Grenzstreumodus des landwirtschaftlichen Streugeräts im Abwurfbereich der der Grenze abgewandten Streuscheibe des landwirtschaftlichen Streugeräts angeordnet, wobei die Grenzstreueinrichtung vorzugsweise auf der der Grenze zugewandten Seite der der Grenze abgewandten Streuscheibe angeordnet ist.

Die Gesamtmenge an Streugut bezieht sich auf die Summe der jeweils auf die beiden Streuscheiben aufgegebenen Mengen an Streugut. Die Ausbringung einer reduzierten Gesamtmenge an Streugut kann also beispielsweise dadurch erreicht werden, dass eine reduzierte Menge an Streugut auf die der Grenze abgewandte Streuscheibe und/oder auf die der Grenze zugewandte Streuscheibe des landwirtschaftlichen Streugeräts aufgegeben wird.

Der Abstand der Innenfahrspuren, welche im Normalstreumodus des landwirtschaftlichen Streugeräts befahren werden, zu der Grenze der landwirtschaftlichen Nutzfläche ist größer als die Hälfte der Arbeitsbreite im Normalstreumodus. Der Abstand der äußeren Grenzfahrspur, welche im Grenzstreumodus des landwirtschaftlichen Streugeräts befahren wird, zu der Grenze der landwirtschaftlichen Nutzfläche ist kleiner als die Hälfte der Arbeitsbreite im Normalstreumodus.

In einer bevorzugten Ausführungsform des erfindungsgemäßen Verfahrens wird Streugut mittels des landwirtschaftlichen Streugeräts in einem Zwischenstreumodus des landwirtschaftlichen Streugeräts ausgebracht, währenddessen eine zumindest abschnittsweise parallel zur Grenze und benachbart zum Innenbereich der landwirtschaftlichen Nutzfläche verlaufende innere Grenzfahrspur innerhalb des grenznahen Bereichs der landwirtschaftlichen Nutzfläche befahren wird. In dem Zwischenstreumodus wird im Vergleich zum Normalstreumodus vorzugsweise eine reduzierte Gesamtmenge an Streugut ausgebracht. Im Zwischenstreumodus wird vorzugsweise eine andere Umlenkeinrichtung zum Umlenken des abgeworfenen Streuguts verwendet, beispielsweise ein Limiter. Die im Zwischenstreumodus verwendete Umlenkeinrichtung ist vorzugsweise an der der Grenze zugewandten Seite der der Grenze zugewandten Streuscheibe angeordnet. Alternativ oder zusätzlich kann im Zwischenstreumodus eine angepasste Schaufelstellung der Wurfschaufeln zumindest einer Streuscheibe im Vergleich zum Normalstreumodus eingestellt sein. Die Anpassung des Streubildes erfolgt im Zwischenstreumodus somit nicht über die im Grenzstreumodus verwendete Grenzstreueinrichtung, sondern über eine andere Umlenkeinrichtung und/oder über eine angepasste Schaufeleinstellung zumindest einer Streuscheibe. Die innere Grenzfahrspur liegt vorzugsweise zwischen der äußeren Grenzfahrspur und dem Innenbereich der landwirtschaftlichen Nutzfläche.

Erfindungsgemäß erfolgt im Grenzstreumodus die Streugutausbringung nur durch die der Grenze der landwirtschaftlichen Nutzfläche abgewandte Streuscheibe des landwirtschaftlichen Streugeräts. Alternativ oder zusätzlich erfolgt im Zwischenstreumodus die Streugutausbringung durch beide Streuscheiben des landwirtschaftlichen Streugeräts. Vorzugsweise ist die Grenzstreueinrichtung im Grenzstreumodus des landwirtschaftlichen Streugeräts zwischen den Streuscheiben des landwirtschaftlichen Streugeräts angeordnet und/oder derart angeordnet, dass das von der der Grenze der landwirtschaftlichen Nutzfläche abgewandten Streuscheibe in Richtung der Grenze der landwirtschaftlichen Nutzfläche abgeworfene Streugut durch die Grenzstreueinrichtung umgelenkt wird. In dem Grenzstreumodus ist die der Grenze der landwirtschaftlichen Nutzfläche zugewandte Streuscheibe des landwirtschaftlichen Streugeräts vorzugsweise deaktiviert und/oder es wird kein Streugut auf die der Grenze der landwirtschaftlichen Nutzfläche zugewandte Streuscheibe des landwirtschaftlichen Streugeräts aufgegeben. Erfindungsgemäß wird im Grenzstreumodus eine um 75 Prozent im Vergleich zum Normalstreumodus reduzierte Gesamtmenge an Streugut ausgebracht. Vorzugsweise erfolgt im Grenzstreumodus keine Streugutausbringung durch die der Grenze der landwirtschaftlichen Nutzfläche zugewandte Streuscheibe. Alternativ oder zusätzlich wird in dem Zwischenstreumodus eine um 25 Prozent im Vergleich zum Normalstreumodus reduzierte Gesamtmenge an Streugut ausgebracht. Vorzugsweise wird im Zwischenstreumodus eine um 50 Prozent im Vergleich zum Normalstreumodus reduzierte Menge an Streugut auf die der Grenze der landwirtschaftlichen Nutzfläche zugewandte Streuscheibe aufgegeben. Vorzugsweise erfolgt im Zwischenstreumodus im Vergleich zum Normalstreumodus keine Reduzierung der auf die der Grenze der landwirtschaftlichen Nutzfläche abgewandten Streuscheibe aufgegebenen Streugutmenge. Auf die feldinnere Streuscheibe wird im Zwischenstreumodus somit die gleiche Menge an Streugut aufgegeben wie im Normalstreumodus.

Es ist außerdem ein erfindungsgemäßes Verfahren vorteilhaft, bei welchem sich der Aufgabepunkt des Streuguts auf die der Grenze der landwirtschaftlichen Nutzfläche abgewandte Streuscheibe des landwirtschaftlichen Streugeräts im Grenzstreumodus von dem Aufgabepunkt des Streuguts auf die Streuscheiben des landwirtschaftlichen Streugeräts im Normalstreumodus unterscheidet. Durch die Anpassung des Aufgabepunkts können im Grenzstreumodus und im Normalstreumodus somit unterschiedliche Abwurfwinkel erzielt werden. Alternativ sind der Aufgabepunkt des Streuguts auf die der Grenze der landwirtschaftlichen Nutzfläche abgewandte Streuscheibe des landwirtschaftlichen Streugeräts im Grenzstreumodus und der Aufgabepunkt des Streuguts auf die Streuscheiben des landwirtschaftlichen Streugeräts im Normalstreumodus identisch. In diesem Fall wird vorzugsweise eine Anpassung des Abwurfwinkels über die Wurfschaufeln der Streuscheiben realisiert.

In einer anderen bevorzugten Ausführungsform des erfindungsgemäßen Verfahrens sind der Aufgabepunkt des Streuguts auf die der Grenze der landwirtschaftlichen Nutzfläche abgewandte Streuscheibe des landwirtschaftlichen Streugeräts und/oder der Aufgabepunkt des Streuguts auf die der Grenze der landwirtschaftlichen Nutzfläche zugewandte Streuscheibe des landwirtschaftlichen Streugeräts im Zwischenstreumodus und der Aufgabepunkt des Streuguts auf die Streuscheiben des landwirtschaftlichen Streugeräts im Normalstreumodus identisch. Alternativ unterscheidet sich der Aufgabepunkt des Streuguts auf die der Grenze der landwirtschaftlichen Nutzfläche abgewandte Streuscheibe des landwirtschaftlichen Streugeräts und/oder der Aufgabepunkt des Streuguts auf die der Grenze der landwirtschaftlichen Nutzfläche zugewandte Streuscheibe des landwirtschaftlichen Streugeräts im Zwischenstreumodus von dem Aufgabepunkt des Streuguts auf die Streuscheiben des landwirtschaftlichen Streugeräts im Normalstreumodus. Vorzugsweise unterscheidet sich der Aufgabepunkt des Streuguts auf die der Grenze der landwirtschaftlichen Nutzfläche zugewandte Streuscheibe des landwirtschaftlichen Streugeräts und/oder der Aufgabepunkt des Streuguts auf die der Grenze der landwirtschaftlichen Nutzfläche zugewandte Streuscheibe des landwirtschaftlichen Streugeräts im Zwischenstreumodus von dem Aufgabepunkt des Streuguts auf die der Grenze der landwirtschaftlichen Nutzfläche abgewandte Streuscheibe des landwirtschaftlichen Streugeräts im Grenzstreumodus.

In einer besonders bevorzugten Ausführungsform des erfindungsgemäßen Verfahrens ist der Abstand der äußeren Grenzfahrspur von der Grenze der landwirtschaftlichen Nutzfläche kleiner als 10m, vorzugsweise kleiner als 5m. Der Abstand der Grenzfahrspur von der Grenze der landwirtschaftlichen Nutzfläche kann beispielsweise etwa 3m betragen. Somit bewegt sich das landwirtschaftliche Streugerät beim Befahren der äußeren Grenzfahrspur in unmittelbarer Nähe zur Grenze, wodurch es dem Gerätebediener auch ohne zusätzliche technische Ausstattung möglich ist, einen im Wesentlichen konstanten Abstand zur Grenze einzuhalten. Durch den konstanten Abstand zwischen der Grenze der landwirtschaftlichen Nutzfläche und der äußeren Grenzfahrspur ergibt sich auch der im Wesentlichen parallele Verlauf der Grenze der landwirtschaftlichen Nutzfläche und der äußeren Grenzfahrspur.

Außerdem ist ein erfindungsgemäßes Verfahren vorteilhaft, bei welchem der Abstand der inneren Grenzfahrspur von der Grenze der landwirtschaftlichen Nutzfläche der Hälfte der Arbeitsbreite im Normalstreumodus entspricht. Die Streugutausbringung im grenznahen Bereich erfolgt somit sowohl im Grenzstreumodus als auch im Zwischenstreumodus. Grenzfahrspuren, deren Abstand von der Grenze der landwirtschaftlichen Nutzfläche der Arbeitsbreitenhälfte im Normalstreumodus entsprechen, haben sich bereits in verschiedenen landwirtschaftlichen Bereichen durchgesetzt. Somit lässt sich das erfindungsgemäße Verfahren zumindest teilweise auf einem in der Praxis etablierten Fahrgassensystem durchführen.

Es ist außerdem ein erfindungsgemäßes Verfahren bevorzugt, bei welchem die Ausbringung des Streuguts beim Durchfahren des grenznahen Bereichs ausschließlich im Grenzstreumodus erfolgt. An die äußere Grenzfahrspur schließen sich in Richtung des Innenbereichs der landwirtschaftlichen Nutzfläche somit unmittelbar die Innenfahrspuren an. Innere Grenzfahrspuren werden in einigen landwirtschaftlichen Bereichen regelmäßig nicht angelegt, sodass die Ausbringung im grenznahen Bereich ausschließlich im Grenzstreumodus zu erfolgen hat. Somit lässt sich das Verfahren auch ohne Weiteres in landwirtschaftlichen Bereichen anwenden, in welchen keine inneren Grenzfahrspuren üblich sind.

In einer weiteren bevorzugten Ausführungsform des erfindungsgemäßen Verfahrens erfolgt ein Erfassen der Position des landwirtschaftlichen Streugeräts auf der landwirtschaftlichen Nutzfläche, insbesondere mittels eines satellitengestützten Positionserfassungssystems des landwirtschaftlichen Streugeräts. Insbesondere erfolgt ein selbsttätiges Einstellen des Normalstreumodus, des Grenzstreumodus und/oder des Zwischenstreumodus durch das landwirtschaftliche Streugerät in Abhängigkeit der erfassten Position des landwirtschaftlichen Streugeräts. Alternativ kann das Einstellen des Normalstreumodus, des Grenzstreumodus und/oder des Zwischenstreumodus auch manuell durch den Benutzer des landwirtschaftlichen Streugeräts erfolgen.

Das satellitengestützte Positionserfassungssystem kann beispielsweise ein GPS-System sein. Das selbsttätige Einstellen eines Streumodus kann das selbsttätige Positionieren bzw. Bewegen der Grenzstreueinrichtung umfassen. Alternativ oder zusätzlich kann das selbsttätige Einstellen eines Streumodus das selbsttätige Einstellen einer Ausbringmenge und/oder das selbsttätige Einstellen eines Aufgabepunkts des Streuguts auf die Streuscheiben des landwirtschaftlichen Streugeräts umfassen. Alternativ kann das Positionieren bzw. Bewegen der Grenzstreueinrichtung, das Einstellen der Ausbringmenge und/oder das Einstellen des Aufgabepunkts des Streuguts auf die Streuscheiben des landwirtschaftlichen Streugeräts auch durch einen Benutzer des landwirtschaftlichen Streugeräts vorgenommen oder veranlasst werden.

Nachfolgend werden bevorzugte Ausführungsformen der Erfindung unter Bezugnahme auf die beiliegenden Zeichnungen näher erläutert und beschrieben. Dabei zeigt:
- Fig. 1
- ein landwirtschaftliches Streugerät beim Ausführen eines Ausführungsbeispiels des erfindungsgemäßen Verfahrens zum Ausbringen von Streugut in einer schematischen Darstellung.

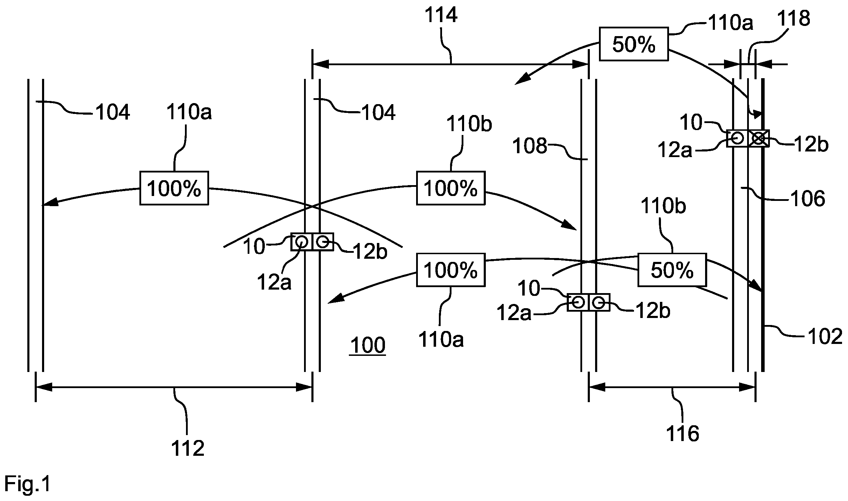

Die Fig. 1 zeigt eine landwirtschaftliche Nutzfläche 100 mit einer Grenze 102. Auf der landwirtschaftlichen Nutzfläche 100 wird mittels eines landwirtschaftlichen Streugeräts 10, nämlich eines Zweischeiben-Düngerstreuers, Streugut, nämlich Dünger, ausgebracht.

Das landwirtschaftliche Streugerät 10 weist zwei nebeneinander angeordnete und rotierend antreibbare Streuscheiben 12a, 12b auf. Mit 12a wird dabei jeweils die der Grenze 102 abgewandte Streuscheibe bezeichnet, wobei die der Grenze 102 zugewandte Streuscheibe mit 12b bezeichnet ist. Abhängig von der Fahrtrichtung des landwirtschaftlichen Streugeräts 10 kann entweder die linke Streuscheibe oder die rechte Streuscheibe die der Grenze 102 zugewandte Streuscheibe 12b sein. Gleiches gilt entsprechend für die der Grenze 102 abgewandte Streuscheibe 12a.

Das landwirtschaftliche Streugerät 10 ist mit einer Grenzstreueinrichtung zum Umlenken zumindest eines Teils des abgeworfenen Streuguts ausgestattet. Ferner weist das landwirtschaftliche Streugerät 10 eine Steuerungseinrichtung auf, mittels welcher unterschiedliche Streumodi des landwirtschaftlichen Streugeräts 10 einstellbar sind. Über eine Dosiereinrichtung des landwirtschaftlichen Streugeräts 10 kann außerdem die Ausbringmenge an Streugut eingestellt werden. Die Dosiereinrichtung umfasst dabei zwei separate Dosierorgane, mittels welchen die Aufgabemenge auf die Streuscheiben 12a, 12b unabhängig voneinander eingestellt werden können. Darüber hinaus weist das landwirtschaftliche Streugerät 10 ein Streugutaufgabesystem auf, mittels welchem der Aufgabepunkt des Streuguts auf die Streuscheiben 12a, 12b einstellbar ist. Die Dosiereinrichtung und das Streugutaufgabesystem werden durch die Steuerungseinrichtung in Abhängigkeit des eingestellten Streumodus gesteuert.

Während des Ausbringvorgangs wird beim Befahren von Innenfahrspuren 104 das Streugut in einem Normalstreumodus des landwirtschaftlichen Streugeräts 10 ausgebracht. Die Innenfahrspuren 104 befinden sich innerhalb eines grenzfernen Innenbereichs der landwirtschaftlichen Nutzfläche 100. Die einzelnen Innenfahrspuren 104 weisen einen Abstand 112 voneinander auf, wobei der Abstand 112 der vorgegebenen Arbeitsbreite entspricht. Beim Ausbringen des Streuguts im Normalstreumodus wird eine zuvor ermittelte Gesamtmenge an Streugut ausgebracht. Hierzu wird auf beide Streuscheiben 12a, 12b jeweils die gleiche Ausbringmenge 110a, 110b an Streugut aufgegeben. Die im Normalstreumodus ausgebrachte Ausbringmenge an Streugut dient nachfolgend als Referenzgröße, sodass die im Normalstreumodus auf die Streuscheiben 12a, 12b aufgegebene Menge an Streugut zu Referenzzwecken mit 100 Prozent angenommen wird.

Innerhalb eines grenznahen Bereichs der landwirtschaftlichen Nutzfläche 100 wird das Streugut in abweichender Weise ausgebracht. Zur Ausbringung des Streuguts im grenznahen Bereich wird sowohl eine äußere Grenzfahrspur 106 als auch eine innere Grenzfahrspur 108 während der Streugutausbringung befahren. Der Abstand 114 zwischen der äußersten Innenfahrspur 104 und der inneren Grenzfahrspur 108 entspricht der Arbeitsbreite. Der Abstand 116 zwischen der inneren Grenzfahrspur 108 und der Grenze 102 entspricht der Hälfte der Arbeitsbreite. Der Abstand 118 zwischen der äußeren Grenzfahrspur 106 und der Grenze 102 beträgt weniger als 5m, beispielsweise etwa 3m.

Während des Befahrens der inneren Grenzfahrspur 108 erfolgt die Streugutausbringung in einem Zwischenstreumodus des landwirtschaftlichen Streugeräts 10. Im Zwischenstreumodus wird im Vergleich zum Normalstreumodus eine reduzierte Gesamtmenge an Streugut ausgebracht. Im Vergleich zum Normalstreumodus wird 50 Prozent weniger Streugut auf der Grenze 102 zugewandte Streuscheibe 12b aufgegeben. Die auf die der Grenze 102 abgewandte Streuscheibe 12a aufgegebene Menge an Streugut entspricht der Menge, welche auch im Normalstreumodus jeweils auf die Streuscheiben 12a, 12b aufgegeben wird. Insgesamt ergibt sich somit im Vergleich zum Normalstreumodus eine um 25 Prozent reduzierte Gesamtmenge an Streugut.

Im Zwischenstreumodus kann beispielsweise ein Limiter eingesetzt werden, mittels welchem die Flugbahn des Streuguts, welches von der der Grenze 102 zugewandten Streuscheibe 12b abgeworfen wird, verändert werden kann. Alternativ oder zusätzlich zu dem Limiter können die Wurfschaufeln der Streuscheibe 12b im Vergleich zum Normalstreumodus angepasst werden, um das Streubild in geeigneter Weise zu beeinflussen. Der Aufgabepunkt des Streuguts auf die Streuscheiben 12a, 12b sind im Zwischenstreumodus und im Normalstreumodus im Wesentlichen identisch. Bei alternativen Ausbringungsvarianten können sich die Aufgabepunkte des Streuguts im Zwischenstreumodus und im Normalstreumodus jedoch auch unterscheiden.

Während des Befahrens der äußeren Grenzfahrspur 106 erfolgt die Streugutausbringung im Grenzstreumodus des landwirtschaftlichen Streugeräts 10. Im Grenzstreumodus wird eine Grenzstreueinrichtung zum Umlenken zumindest eines Teils des abgeworfenen Streuguts verwendet, wobei die Grenzstreueinrichtung in dem der Grenze 102 zugewandten Abwurfbereich der der Grenze 102 abgewandten Streuscheibe 12a angeordnet ist. Die Grenzstreueinrichtung ist im Grenzstreumodus im Wesentlichen zwischen den Streuscheiben 12a, 12b angeordnet. Im Grenzstreumodus wird im Vergleich zum Normalstreumodus ebenfalls eine reduzierte Gesamtmenge an Streugut ausgebracht. Hierbei ist die der Grenze 102 zugewandte Streuscheibe 12b im Grenzstreumodus deaktiviert, sodass keine Streugutausbringung durch die Streuscheibe 12b erfolgt. Auf die der Grenze 102 abgewandte Streuscheibe 12a wird im Vergleich zum Normalstreumodus eine um 50 Prozent verringerte Menge 110a an Streugut aufgegeben. Somit wird im Grenzstreumodus eine um 75 Prozent im Vergleich zum Normalstreumodus reduzierte Gesamtmenge an Streugut ausgebracht.

Der Aufgabepunkt des Streuguts auf die der Grenze 102 der landwirtschaftlichen Nutzfläche 100 abgewandte Streuscheibe 12a im Grenzstreumodus unterscheidet sich von dem Aufgabepunkt des Streuguts auf die Streuscheiben 12a, 12b im Normalstreumodus. In alternativen Varianten der Streugutausbringung können die Aufgabepunkte im Grenzstreumodus und im Normalstreumodus auch identisch sein.

### Bezugszeichen

- 10: Streugerät
- 12a, 12b: Streuscheiben
- 100: landwirtschaftliche Nutzfläche
- 102: Grenze
- 104: Innenfahrspuren
- 106: äußere Grenzfahrspur
- 108: innere Grenzfahrspur
- 110a, 110b: scheibenbezogene Ausbringmengen
- 112-120: Abstände

## Patentansprüche

1. Verfahren zum Ausbringen von Streugut auf eine landwirtschaftliche Nutzfläche (100) mittels eines landwirtschaftlichen Streugeräts (10) mit zwei rotierend antreibbaren Streuscheiben (12a, 12b), mit den Schritten:
- Ausbringen von Streugut mittels des landwirtschaftlichen Streugeräts (10) in einem Normalstreumodus des landwirtschaftlichen Streugeräts (10) während des Befahrens von Innenfahrspuren (104) innerhalb eines grenzfernen Innenbereichs der landwirtschaftlichen Nutzfläche (100); und
- Ausbringen von Streugut mittels des landwirtschaftlichen Streugeräts (10) in einem Grenzstreumodus des landwirtschaftlichen Streugeräts (10) während des Befahrens einer zumindest abschnittsweise parallel und benachbart zur Grenze (102) der landwirtschaftlichen Nutzfläche (100) verlaufenden äußeren Grenzfahrspur (106) innerhalb eines grenznahen Bereichs der landwirtschaftlichen Nutzfläche (100);
wobei in dem Grenzstreumodus eine Grenzstreueinrichtung zum Umlenken zumindest eines Teils des abgeworfenen Streuguts verwendet und im Vergleich zum Normalstreumodus eine reduzierte Gesamtmenge an Streugut ausgebracht wird, **dadurch gekennzeichnet, dass** im Grenzstreumodus die Streugutausbringung nur durch die der Grenze (102) der landwirtschaftlichen Nutzfläche (100) abgewandte Streuscheibe (12a) des landwirtschaftlichen Streugeräts (10) erfolgt und in dem Grenzstreumodus eine um 75 Prozent im Vergleich zum Normalstreumodus reduzierte Gesamtmenge an Streugut ausgebracht wird.

2. Verfahren nach Anspruch 1,
**gekennzeichnet durch** den Schritt:
- Ausbringen von Streugut mittels des landwirtschaftlichen Streugeräts (10) in einem Zwischenstreumodus des landwirtschaftlichen Streugeräts (10) während des Befahrens einer zumindest abschnittsweise parallel zur Grenze (102) und benachbart zum Innenbereich der landwirtschaftlichen Nutzfläche (100) verlaufenden inneren Grenzfahrspur (108) innerhalb des grenznahen Bereichs der landwirtschaftlichen Nutzfläche (100);
wobei in dem Zwischenstreumodus vorzugsweise eine reduzierte Gesamtmenge an Streugut im Vergleich zum Normalstreumodus ausgebracht wird.

3. Verfahren nach Anspruch 2,
**dadurch gekennzeichnet, dass** im Zwischenstreumodus die Streugutausbringung durch beide Streuscheiben (12a, 12b) des landwirtschaftlichen Streugeräts (10) erfolgt.

4. Verfahren nach Anspruch 2 oder 3,
**dadurch gekennzeichnet, dass** in dem Zwischenstreumodus eine um 25 Prozent im Vergleich zum Normalstreumodus reduzierte Gesamtmenge an Streugut ausgebracht wird.

5. Verfahren nach Anspruch 2, 3 oder 4,
**dadurch gekennzeichnet, dass** der Aufgabepunkt des Streuguts auf die der Grenze (102) der landwirtschaftlichen Nutzfläche (100) abgewandte Streuscheibe (12a) des landwirtschaftlichen Streugeräts (10) und/oder der Aufgabepunkt des Streuguts auf die der Grenze (102) der landwirtschaftlichen Nutzfläche (100) zugewandte Streuscheibe (12b) des landwirtschaftlichen Streugeräts (10) im Zwischenstreumodus und der Aufgabepunkt des Streuguts auf die Streuscheiben (12a, 12b) des landwirtschaftlichen Streugeräts (10) im Normalstreumodus identisch sind.

6. Verfahren nach Anspruch 2, 3, 4 oder 5,
**dadurch gekennzeichnet, dass** der Abstand (116) der inneren Grenzfahrspur von der Grenze (102) der landwirtschaftlichen Nutzfläche (100) der Hälfte der Arbeitsbreite entspricht

7. Verfahren nach Anspruch 1,
**dadurch gekennzeichnet, dass** die Ausbringung des Streuguts beim Durchfahren des grenznahen Bereichs ausschließlich im Grenzstreumodus erfolgt.

8. Verfahren nach einem der vorstehenden Ansprüche,
**dadurch gekennzeichnet, dass** sich der Aufgabepunkt des Streuguts auf die der Grenze (102) der landwirtschaftlichen Nutzfläche (100) abgewandte Streuscheibe (12a) des landwirtschaftlichen Streugeräts (10) im Grenzstreumodus von dem Aufgabepunkt des Streuguts auf die Streuscheiben (12a, 12b) des landwirtschaftlichen Streugeräts (10) im Normalstreumodus unterscheidet.

9. Verfahren nach einem der vorstehenden Ansprüche,
**dadurch gekennzeichnet, dass** der Abstand (118) der äußeren Grenzfahrspur (106) von der Grenze (102) der landwirtschaftlichen Nutzfläche (100) kleiner ist als 10 Meter, vorzugsweise kleiner als 5 Meter.

10. Verfahren nach einem der vorstehenden Ansprüche,
**gekennzeichnet durch** den folgenden Schritt:
- Erfassen der Position des landwirtschaftlichen Streugeräts (10) auf der landwirtschaftlichen Nutzfläche (100), insbesondere mittels eines satellitengestützten Positionserfassungssystem des landwirtschaftlichen Streugeräts (10); und vorzugsweise
- selbsttätiges Einstellen des Normalstreumodus, des Grenzstreumodus und/oder des Zwischenstreumodus durch das landwirtschaftliche Streugerät (10) in Abhängigkeit der erfassten Position des landwirtschaftlichen Streugeräts (10).

## Claims

1. Method for spreading granular material on a utilized agricultural area (100) by means of an agricultural spreader (10) having two rotationally drivable spreading disks (12a, 12b), comprising the steps of:
- spreading granular material by means of the agricultural spreader (10) in a normal spreading mode of the agricultural spreader (10) while driving on inner driving tracks (104) within a boundary-distal interior region of the utilized agricultural area (100); and
- spreading granular material by means of the agricultural spreader (10) in a limited spreading mode of the agricultural spreader (10) during travel on an outer boundary driving track (106) that runs, at least in some segments, parallel and adjacent to the boundary (102) of the utilized agricultural area (100), within a boundary-proximal region of the utilized agricultural area (100);
wherein a boundary spreading device for deflecting at least a portion of the discharged granular material is used in boundary spreading mode, and a reduced total amount of granular material is applied in comparison to normal spreading mode, **characterized in that,** in boundary spreading mode, the spreading of the granular material takes place only via the spreading disk (12a) of the agricultural spreader (10), said spreading disk being oriented away from the boundary (102) of the utilized agricultural area (100) and, in boundary spreading mode, a total amount of granular material which is reduced by 75 percent as compared to normal spreading mode is applied.

2. Method according to claim 1,
**characterized by** the step:
- spreading granular material by means of the agricultural spreader (10) in an intermediate spreading mode of the agricultural spreader (10) during travel on an inner boundary driving track (108) that runs, at least in some segments, parallel to the boundary (102) and adjacent to the inner region of the utilized agricultural area (100), within the boundary-proximal region of the utilized agricultural area (100);
wherein, in intermediate spreading mode, a reduced total amount of granular material is preferably applied as compared to normal spreading mode.

3. Method according to claim 2,
**characterized in that,** in intermediate spreading mode, the spreading of the granular material takes place via both spreading disks (12a, 12b) of the agricultural spreader (10).

4. Method according to claim 2 or 3,
**characterized in that** a total amount of granular material that is reduced by 25 percent compared to normal spreading mode is applied in the intermediate spreading mode.

5. Method according to claim 2, 3, or 4,
**characterized in that** the application point of the granular material to the spreading disk (12a) of the agricultural spreader (10), said spreading disk (12a) facing away from the boundary (102) of the utilized agricultural area (100), and/or the application point of the granular material to the spreading disk (12b) of the agricultural spreader (10), said spreading disk (12b) facing toward the boundary (102) of the utilized agricultural area (100), in intermediate spreading mode, and the application point of the granular material to the spreading disks (12a, 12b) of the agricultural spreader (10), are identical in normal spreading mode.

6. Method according to claim 2, 3, 4, or 5,
**characterized in that** the distance (116) of the inner boundary driving track from the boundary (102) the utilized agricultural area (100) corresponds to half of the working width

7. Method according to claim 1,
**characterized in that** the spreading of the granular material upon traveling through the boundary-proximal region takes place exclusively in boundary spreading mode.

8. Method according to any one of the preceding claims,
**characterized in that** the application point of the granular material to the spreading disk (12a) of the agricultural spreader (10), said spreading disk (12a) facing away from the boundary (102) of the utilized agricultural area (100) in boundary spreading mode, differs from the application point of the granular material to the spreading disks (12a, 12b) of the agricultural spreader (10) in normal spreading mode.

9. Method according to any one of the preceding claims,
**characterized in that** the distance (118) of the outer boundary driving track (106) from the boundary (102) of the utilized agricultural area (100) is less than 10 meters, preferably less than 5 meters.

10. Method according to any one of the preceding claims,
**characterized by** the following step:
- detecting the position of the agricultural spreader (10) on the utilized agricultural area (100), in particular by means of a satellite-assisted position detection system of the agricultural spreader (10); and preferably
- automatically setting the normal spreading mode, boundary spreading mode, and/or intermediate spreading mode for the agricultural spreader (10) depending on the detected position of the agricultural spreader (10).

## Revendications

1. Procédé d'épandage d'un produit d'épandage sur une surface utile agricole (100) au moyen d'un épandeur agricole (10) présentant deux disques d'épandage (12a, 12b) pouvant être entraînés en rotation, comprenant les étapes de :
- épandage de produit d'épandage au moyen de l'épandeur agricole (10) dans un mode d'épandage normal de l'épandeur agricole (10) pendant le déplacement sur des voies de circulation internes (104) à l'intérieur d'une zone interne éloignée des limites de la surface utile agricole (100) ; et
- épandage de produit d'épandage au moyen de l'épandeur agricole (10) dans un mode d'épandage en limite de l'épandeur agricole (10) pendant le déplacement sur une voie de circulation de limite externe (106), s'étendant au moins par sections parallèle et adjacente à la limite (102) de la surface utile agricole (100), à l'intérieur d'une zone proche de la limite de la surface utile agricole (100) ;
dans le mode d'épandage en limite, un dispositif d'épandage en limite étant utilisé pour dévier au moins une partie du produit d'épandage projeté et une quantité totale de produit d'épandage réduite étant épandue par comparaison avec le mode d'épandage normal, **caractérisé en ce que,** dans le mode d'épandage en limite, l'épandage de produit d'épandage n'est effectué que par le disque d'épandage (12a) de l'épandeur agricole (10) à l'opposé de la limite (102) de la surface utile agricole (100) et, dans le mode d'épandage en limite, une quantité totale de produit d'épandage réduite de 75 pour cent par comparaison avec le mode d'épandage normal est épandue.

2. Procédé selon la revendication 1,
**caractérisé par** l'étape de :
- épandage de produit d'épandage au moyen de l'épandeur agricole (10) dans un mode d'épandage intermédiaire de l'épandeur agricole (10) pendant le déplacement sur une voie de circulation de limite interne (108), s'étendant au moins par sections parallèle à la limite (102) et adjacente à la zone interne de la surface utile agricole (100), à l'intérieur de la zone proche de la limite de la surface utile agricole (100) ;
dans le mode d'épandage intermédiaire, de préférence, une quantité totale réduite de produit d'épandage étant épandue par comparaison avec le mode d'épandage normal.

3. Procédé selon la revendication 2,
**caractérisé en ce que,** dans le mode d'épandage intermédiaire, l'épandage de produit d'épandage est effectué par les deux disques d'épandage (12a, 12b) de l'épandeur agricole (10).

4. Procédé selon la revendication 2 ou 3,
**caractérisé en ce que,** dans le mode d'épandage intermédiaire, une quantité totale de produit d'épandage réduite de 25 pour cent par comparaison avec le mode d'épandage normal est épandue.

5. Procédé selon la revendication 2, 3 ou 4,
**caractérisé en ce que** le point d'épandage du produit d'épandage sur le disque d'épandage (12a) de l'épandeur agricole (10) à l'opposé de la limite (102) de la surface utile agricole (100) et/ou le point d'épandage du produit d'épandage sur le disque d'épandage (12b) de l'épandeur agricole (10) tourné vers la limite (102) de la surface utile agricole (100) dans le mode intermédiaire et le point d'épandage du produit d'épandage sur les disques d'épandage (12a, 12b) de l'épandeur agricole (10) dans le mode d'épandage normal sont identiques.

6. Procédé selon la revendication 2, 3, 4 ou 5,
**caractérisé en ce que** l'écart (116) entre la voie de circulation de limite interne et la limite (102) de la surface utile agricole (100) correspond à la moitié de la largeur de travail

7. Procédé selon la revendication 1,
**caractérisé en ce que** l'épandage du produit d'épandage est effectué lors de la traversée de la zone proche de la limite uniquement dans le mode d'épandage en limite.

8. Procédé selon l'une quelconque des revendications précédentes,
**caractérisé en ce que** le point d'épandage du produit d'épandage sur le disque d'épandage (12a) de l'épandeur agricole (10) à l'opposé de la limite (102) de la surface utile agricole (100) dans le mode d'épandage en limite se différencie du point d'épandage du produit d'épandage sur les disques d'épandage (12a, 12b) de l'épandeur agricole (10) dans le mode d'épandage normal.

9. Procédé selon l'une quelconque des revendications précédentes,
**caractérisé en ce que** l'écart (118) entre la voie de circulation de limite externe (106) et la limite (102) de la surface utile agricole (100) est inférieur à 10 mètres, de préférence inférieur à 5 mètres.

10. Procédé selon l'une quelconque des revendications précédentes,
**caractérisé par** l'étape suivante de :
- détection de la position de l'épandeur agricole (10) sur la surface utile agricole (100), en particulier au moyen d'un système de détection de position par satellite de l'épandeur agricole (10) ; et de préférence
- réglage automatique du mode d'épandage normal, du mode d'épandage en limite et/ou du mode d'épandage intermédiaire par l'épandeur agricole (10) en fonction de la position détectée de l'épandeur agricole (10).
